# EUROPEAN PATENT SPECIFICATION

(11) **EP 1 449 433 B1**
(45) Date of publication and mention of the grant of the patent: **26.04.2006**
(21) Application number: 04002775.7
(22) Date of filing: 09.02.2004
(51) Int. Cl.: A01M 7/00

(54) **Tunnel sprayer for rows of orchards, vineyards or other plants**
Tunnelspritzgerät für Reihen von Obstgärten, Weingärten oder andere Pflanzen
Pulvérisateur en tunnel pour les lignes de verger, de vignoble, ou d'autres plantes

(30) Priority: 20.02.2003 IT BO20030072
(43) Date of publication of application: 25.08.2004
(73) Proprietor: Bertoni S.r.l., 48014 Castel Bolognese, RA (IT)
(72) Inventor: Bertoni S.r.l., 48014 Castel Bolognese, RA (IT)
(74) Representative: Porsia, Dino

(56) References cited:
- EP-A- 0 549 058
- EP-A- 0 812 537
- DE-A- 3 914 117
- US-A- 5 469 653

## Description

For the spraying of phytosanitary products on rows of orchards, vineyards or other plants, there are known machines of the so-called tunnel type, provided with a portal structure which is moved astride of the row and which on the opposed uprights carries in vertical manner the bars for the spraying of phytosanitary liquids, in such a manner that the same row is treated at the same time on the opposed sides, with a single run. The first attempts were made by leaving the function of carrying of the drops only to the kinetic energy, with poor results on the plants of great dimensions, because of the difficulty of reaching and wetting the most internal portion of the foliage. Further attempts were made with the simultaneous introduction to the sprayed flow of a stream of air, at correct values of pressure and flow, both with air convection systems and with pneumatic systems. The results of the attempts made with these means gave good results for the possibility of limiting the amount of active principles used for the treated surface, but still demonstrated some limits regarding the penetration and the uniformity of wetting. These experiences, however, pointed out that in the tunnel sprayers it is indispensable the utilisation of a flow of air having the same direction of flow with respect to the flow of sprayed liquid, but also pointed out that the opposed flows on the two sides of the row do not allow to utilise at the maximum the potential advantages which was deriving from the utilisation of a stream of air.

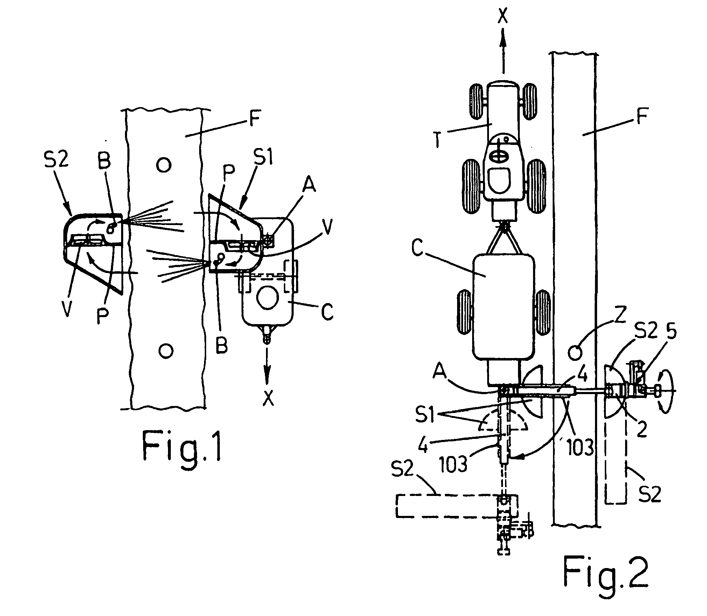

In order to attempt improve the performance of the tunnel system, in the Italian patent No. 1.267.116, belonging to the same applicant, there is described a tunnel sprayer which in an embodiment carries on each upright a spraying bar with a delivery with the same direction of flow of air under pressure and laterally and parallel to this, a vertical suction or intake mouth. The other upright of the machine carries the same components, but in inverted position, this meaning that to the spraying bar and to the delivery of air under pressure in an upright, there is opposed a suction mouth in the opposed bar, and vice versa. The object of this solution is to strengthen, by means of suction, the circulation of air under pressure through the foliage of the plants, in order to allow that the leaves arrange themselves longitudinally according to the flow of air and may be uniformly wetted on both the faces by the sprayed active principle and has also the object to recover by means of the same intake (suction), the surpluses of active principle which pass through the foliage and otherwise would be lost. Document DE-A-39 14 117 discloses the same kind of tunnel sprayer according to the preamble of claim 1. On the magazine "L'informatore Agrario" (The Agrarian Informer) (1998) by F. Pezzi and G. Ade, of the department of Economy and Agriculture Engineering of the University of Bologna, there is described a prototype of a such machine as described in plan view in the Figure 1 of the attached drawings, where on the uprights of the portal there are assembled opposed and semi-cylindrical shields S1 and S2, the one toward the other with the hollow portion which is internally divided in two chambers by a vertical wall P which carries at different height and with symmetrical collocations, two axial fans V driven for example by hydraulic engines. The fans create in one chamber the intake and in the other chamber of the same shield create the delivery of air under pressure which while is coming out licks a vertical spraying bar B provided with nozzles suitably equispaced between them. The two shields are supported by a portal structure assembled on a towed carriage C which carries all the components of the sprayer and the hydraulic gearcase for the driving of the engines of the fans and of the other hydraulic actuators. The relative position of the shields S1 and S2 is adjustable by means of a guide and slide system in the upper portion of the portal, remote-controlled by an hydraulic actuator, to adapt the tunnel to the different widths of the rows and to the different manoeuvre requirements and hydraulic control means are also provided to rotate, if required, all the portal around the vertical axis A of the upright which is secured to the transport carriage C, to arrange the same portal behind the carriage and to reduce the transversal dimensions of the whole system during the transport and during the approach phase to the row.

This prototype gave good results, has demonstrated a good capacity for the wetting of the central portion of the plants, also in the upper portion, but has demonstrated disuniformity and asymmetries of deposit of the liquids on the two sides of the vegetative wall and difficulties in the wetting of the surfaces of the plants not oriented toward the sides of the row. In the prototype, the fans were arranged with their axis perpendicular to the external wall of the delivery chamber, the discharging mouth of which had an opening substantially equal to the diameter of the same fans, therefore very wide. With this solution, the streams of air generated by the fans firstly undergo to a remarkable loss of power during the impact with the said external wall of the delivery chamber and then interfere reciprocally, determining a greater pressure in the intermediate portion of the chamber and losses of pressure in the low portion of the same delivery chamber. The solution illustrated in Figure 1, generates in the delivery chambers of the two shields, streams of air having a great flow, but with moderate pressures and turbulences on the foliages of the row.

To obviate the above mentioned drawbacks, a first object of the invention according to claim 1 is that the delivery chambers of each shield act as collectors, as distributor and as buffer and compensation means, to collect the stream of air generated by the fans or other suitable means and to convey the same with limited losses of power in direction of their discharging mouth, the whole being structured in such a manner that the stream of air generated by the fan/s comes out with uniformly distributed values of pressure and flow from the various portions of the same discharging mouth. For this object the discharging mouth of the delivery chamber presents a limited width or section and may be, if required, provided with fins for the distribution of the flow. Another object of the invention is to allow that the delivery chambers realise, by their discharging mouth, a distribution of air with a pressure greater than the pressure which may be obtained with the known means and with a more concentrate action on the surface of the row, in such a manner to present a greater capability of penetration and to originate a greater turbulence in the leaves of the treated plants. An embodiment of the invention is to cause that the delivery chambers present on each side of the machine at least two adjacent discharging mouths, parallel but oriented in different manner, the most internal (inner) of which is for example perpendicularly oriented with respect of the row, while the external is inclined toward the internal, in such a manner that the two flows form between them an internal acute angle and in addition create turbulence. The liquid with the active principles may be delivered by a single bar with nozzles, placed between the two discharging mouths, in such a manner that the sprayed liquid is conveyed by the two adjacent flows of air which form a vortex which pre-arranges the vegetative surface to a more uniformly wetting. According to another embodiment, the flow of air delivered from each discharging mouth may lick in the same direction of flow a respective bar with spraying nozzles for the liquid with the active principles. The two discharging mouths of the flows of air under pressure may be realised with longitudinal baffles which divide in two portions the delivery chamber which collects the flow of air under pressure generated by the fans or by the turbines, or may be obtained with nozzles arranged on a closing chamber of the delivery chamber or assembled on tubular chambers realised with light material and connected with one of their end and/or with an intermediate portion to the delivery of the generators of air under pressure.

Another drawback present in the known art consists in the impossibility to use the tunnel machine in the rows in which are placed support poles for the electric or telephonic lines. To obviate to this drawback, an embodiment of the invention provides that the shield on the side of the row opposed to the one by which the machine which is referred to runs, is provided with means which under command allow the same to rotate around a horizontal and parallel axis or coincident with the longitudinal axis of the slide upon which the same shield is assembled for the adjustment of the fixed shield. When the machine reaches the obstacle, the external shield is rotated of about ninety degrees around said upper horizontal axis, upwardly and backwardly in such a manner to be arranged over the row and in this condition the portal is rotated around the vertical axis for the securing to the carriage, in such a manner to be arranged behind the same carriage, disengaging from the row and from the relative obstacle which may be passed over. The machine is moved beyond the obstacle, then in sequence the portal is rotate of ninety degrees around the vertical axis and the shield is lowered with rotation of ninety degrees around the upper horizontal axis. In this manner the portal retums astride of the row and may return to operate beyond the obstacle.

Further features of the invention, and the advantages deriving therefrom, will appear better evident from the following description of some preferred embodiments of same made, by way of non-limiting example, with reference to the figures of three attached sheets of drawings, in which, in addition to the already considered state of the art of Figure 1, it is noted that:
- Figure 2 is a plan view from above of the sprayer which is referred to;
- Figure 3 shows the sprayer in elevation from the rear front;
- Figures 4 and 5 show in plan from above different working diagrams of the sprayer improved according to the invention;
- Figures 6 and 7 show in perspective one of the shields of the sprayer according to the different embodiments but not according to the invention which use a principle which may be referred to the one shown in Figure 5;
- Figure 8 shows in lateral elevation one of the diagrams of the sprayer according to a further embodiment but not according to the invention;
- Figure 9 shows in plan from above a further embodiment of the sprayer;
- Figure 10 is an elevation view of the internal side, as indicated by the arrow K, of one of the shields of the sprayer according to Figure 9.

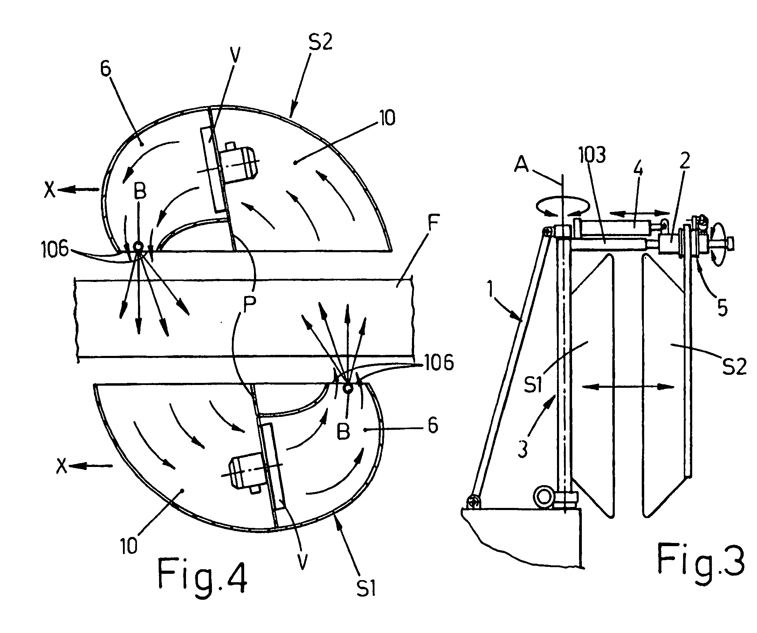

In Figure 2 with reference T there is shown the tractor which moves forward in the direction X and which tows the carriage C with the various components of the sprayer, among which there is the tank of the liquid to be sprayed, the diaphragm pump for the feeding of the bars, the constant pressure regulator and a hydraulic gearcase for the feeding of the various actuators. The shields S1 and S2 of the sprayer are shown with continuous line in the working position astride of the row F. The shield S1 (see also Figure 3) is fixed on the upright of the portal 3 which is rotatably supported around its vertical axis A of the braced structure 1 which binds the same portal to the support and transport means, for example the carriage C, while the opposed shield S2 is assembled upon a slide 2 which longitudinally slides on the breastplate 103 of the portal and is connected to a hydraulic cylinder 4 by means of which it is possible to adjust the distance of the shield S2 from the shield S1 and to adapt the sprayer to the various utilization requirements. The upright which carries the shield S2 is connected to the slide 2 with the possibility to rotate around a horizontal axis which for example coincides with the longitudinal axis of said slide, and upon said slide there is assembled an actuator 5, for example of the hydraulic type, in order to effect with a remote control the rotation around said horizontal axis. From Figure 2 there appears clearly how when on the row F there is an obstacle Z, represented for example by a pole of the electric or telephonic line, it is possible to activate the unit 5 to horizontally raise the shield S2 as shown with dotted line, in order to arrange the same over the row. In these conditions is controlled the rearward rotation of the portal around the vertical axis A, with angular displacement of ninety degrees, in such a manner that the whole sprayer moves away from the row and arranges behind the carriage C which may advance farther the obstacle Z. Once the obstacle is over passed, the same operations are backwards repeated, with forward rotation of ninety degrees of the portal around the vertical axis A and then with downward rotation of ninety degrees of the shield S2, in such a manner that the sprayer retums astride of the row and may resume to operate. The actuator 5 may be constituted by a hydraulic motor, a hydraulic cylinder or any other suitable means easily conceivable and realisable by persons skilled in the art. What now described, even if important, is however a secondary aspect of the sprayer which is mostly characterised by improvements in the delivery chamber of the air under pressure of the shields S1, S2, to ensure a uniform distribution and with correct values of flow rate and pressure of the flow of air which in the examples considered hereafter is supposed to be generated by means of axial fans (ventilators), but in the practice may be generated by any suitable means, not excluded the turbines driven by hydraulic engines or electric motors. From the example of Figure 4 it is noted that the vertical, transversal and internal wall P of the shields S1 and S2, upon which there are assembled the fans V and which divides the delivery chamber 6 from the next intake chamber 10, may be suitably inclined in such a manner to form on the side of the chamber 6 and in incidence with the open side of the shield an angle which is less of 90° and the same delivery chamber 6 is realised with curved walls having the shape of a scroll, in order to guide and to convey the air under pressure with limited losses of charge and the same chamber 6 is open on the same active side of the shield with a mouth 106 having a limited width, in such a manner that the chamber 6 may work as a distributor or a buffer, acting in such a manner to distribute the flow rates and the pressure in the more possibly uniform manner on the various portions of the discharging mouth 106. For the obtaining of this object, it is not excluded that the width of the mouth 106 must be diversified in the height and/or that there must be used internal fins for the distribution of the flow, not shown because conceivable and easily realisable by persons skilled in the art. It is to be understood that the width of the discharging mouth 106 of the chamber 6 may be, as a matter of fact, more narrow of the one schematised in Figure 4, in such a manner that from said mouth comes out a blade of air under pressure which licks and tows the jets of the treatment liquid supplied by the next spraying bar B suitably oriented with its nozzles, for example with a perpendicular orientation or preferably with an inclined orientation with respect to the row, in such a manner that the opposed bars may uniformly wet also the anterior and posterior fronts of the trunks of large diameter of the plants in the row F.

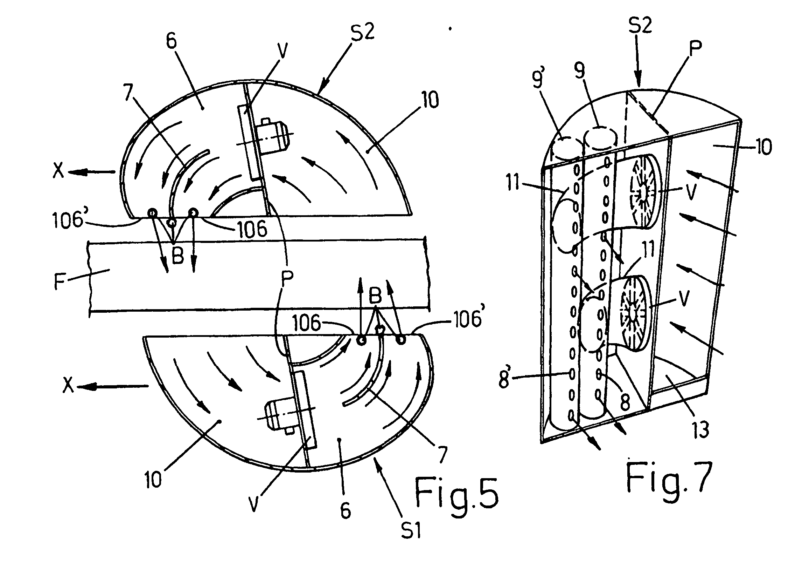

The solution of Figure 5 differs from the one previously considered, for the presence in the delivery chambers 6 of the shields S1, S2, of a vertical, curved and median baffle 7, which divides the flow generated by the fans V in two portions, in such a manner that each chamber 6 results to be provided with two adjacent discharging mouth 106, 106' which deliver flows oriented in different manner, which generate in the whole a composite flow which invests with turbulence and with a different angle of incidence the plants of the row F. The treatment liquid may be delivered by a single bar B placed between the two discharging mouths 106, 106', as indicated with dotted line, or by means of respective bars B placed at the level of each of said mouths and having the nozzles oriented in the same direction of flow with the flows of air which come out from the same mouths 106, 106', as illustrated with continuous line, in such a manner to interest the plants with a different incidence angle, also to ensure a more uniform and distributed wetting of the same plants.

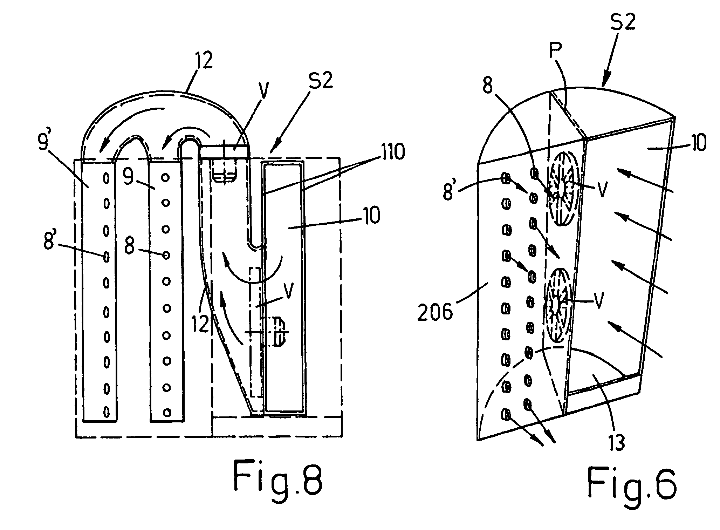

The solution illustrated in the Figure 6 but not according to the invention provides that the delivery chambers 6 are closed on the side toward the row, by a wall 206 upon which there are obtained vertical lines of holes or slots with nozzles 8, 8' differently oriented and staggered in direction of the row, in such a manner to generate the two flows differently oriented like the previous case. Also in this case the treatment liquid may be delivered by a single vertical bar placed between the two lines of nozzles 8, 8' or by means of respective bars, not shown, licked by the air flows discharged by the said lines of nozzles.

The solution of Figure 7 but not according to the invention shows how the nozzles 8, 8' for the delivering of flows of air under pressure are assembled upon cylindrical air tubes 9, 9', made with light material, for example with plastics or with waterproof cloth and with suitable supporting frame, the two tubes being connected by means of ducts 11 to one or more generators V of air under pressure which at the same moment create the suction in the chamber 10. Also in this case the spraying bars for the treatment liquids, not shown, may be in the number of one or two for each shield, as described similarly for the above mentioned embodiments.

The solution of Figure 8 but not according to the invention differs from that of Figure 7 because of the air tubes 9, 9', with the delivering nozzles 8, 8', are connected with their upper end, by means of suitable ducts 12, to the generator/s V for the air under pressure which may be differently placed as shown with continuous or dotted line and which are connected to the intake chamber 10 which may be open on the row with a mouth 110 having a limited width and suitably shaped, in order to magnify and to uniform the intake action onto the whole vertical extension of the same mouth 110. Each intake chamber 10 is provided on the bottom with a tank 13 for the collection of the treatment fluid sucked and recovered during the operation of the sprayer and means are provided to allow the periodical emptying of said tank.

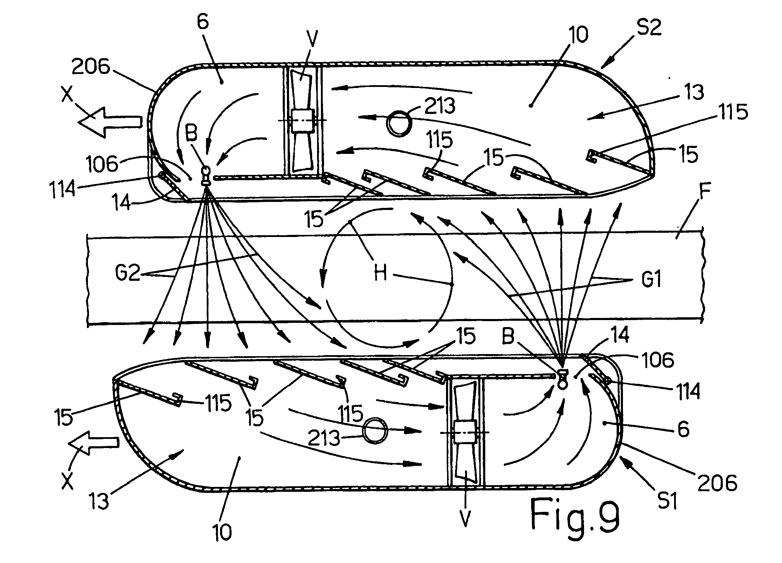

In the embodiment of Figure 9, the shields S1 and S2 have a width or depth which is substantially equal to the diameter of the fans V which, differently from the previous solutions, are oriented with their axis parallelly to the row F. The delivery chamber 6 for the air under pressure generated by the fans V, terminates with an end wall 206 opposed to the same fans, with a shape which is suitably curved, so it can convey the air generated by the same fans in the direction of the lateral discharging mouth 106, at the level of which there is placed, with possibility of orientation, at least a bar B for the delivery of the treatment liquid, and there is arranged, in substantial condition of tangency to said end 206, a deflector 14 which conveys in the direction of the row F of the plants the flow G1 or G2 formed by the air coming from the fans and from the phytosanitary treatment fluid delivered from the bar/s B. The deflector 14 may have a fixed arrangement or may be hinged around its vertical axis 114 for the connection to the shield and means may be provided to orientate in different manner said deflector in direction of the row F, for example to neutralize drift actions caused by the wind during the utilization of the sprayer which is referred to.

Good results have been obtained dimensioning each shield S1, S2 with a correct ratio between the length of the intake chamber 10 and the length of the delivery chamber 6 of each shield S1 and S2, for example with an intake chamber 10 having a length which is about 2 and 3 times the length of the delivery chamber 6, the whole in such a manner that the two flows G1 and G2 of air and of phytosanitary liquid delivered by the bars B and the delivery chambers 6 of each shield, result to be sufficiently distant as to not interfere negatively and to allow the formation between said flows of a vortex H which ensures the dispersion on the whole surface of the plants of the row F, of the active principle sprayed by the bars B.

It resulted useful to place on the lateral mouth of each intake chamber 10, for the whole of its height, panels or vertical blades 15 preferably inclined backwards with respect of the respective fans V of each shield, in order to divide the same mouth in several adjacent mouths, for example of increasing width starting from the fans or in any case structured to allow that also the more distant mouths from the same fans V result to be interested from a sufficient and suitable air flow, the same blades 15 being structured in such a manner to realise traps for the dynamic pulling down of the liquid droplets carried by the sucked air flow. For this purpose the blades 15 have the internal vertical side 115 with a U plan profile open on the exposed surface of the same blades, in such a manner to stop and canalise downwardly the droplets carried by the sucked air flow which licks the blades which are referred to. It is to be understood that for this same object, the blades 15 may be characterised by the fact that they are presenting a rough surface, similarly to the internal surface of the intake chamber 10 and which in the same intake chamber may be placed other suitable filtration means. Said roughness may be obtained with suitable machining of the said surfaces and/or by applying upon these surfaces panels of suitable roughness and/or porous material. Since a portion of droplets of the treatment liquid may overpass the fans V and may reach the delivery chamber 6, it may be useful to realise with suitable roughness and/or porosity also the internal surface of said chamber, in order to produce a further dynamic pulling down of said liquid.

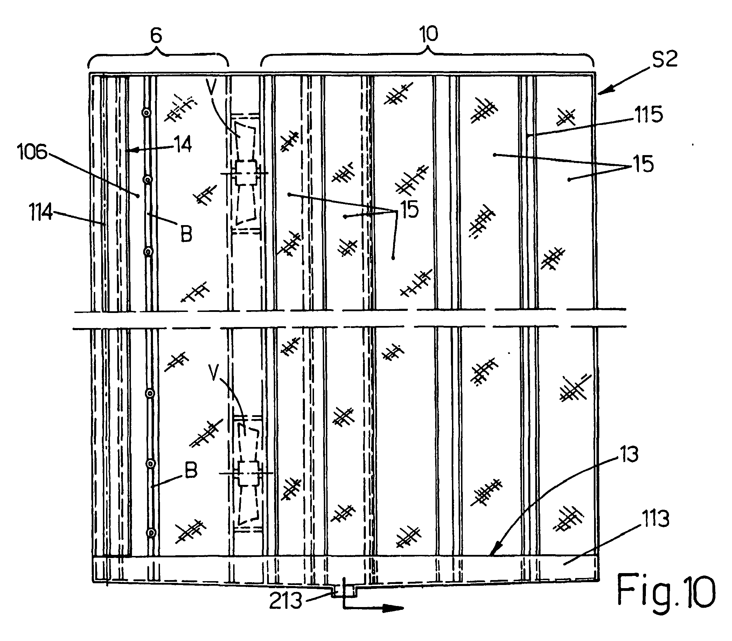

Differently from what shown in the previous Figures 6, 7 and 8, where only the intake mouth of each shield S1, S2 was inferiorly provided with a raised portion 113 for the obtaining in the same intake chamber of a lower tank 13 for the collection of the recovered liquid, Figures 9 and 10 show that the same collection tank 13 may be such to interest the whole lower portion of each shield S1 or S2 and that each tank may be provided with a lowered portion with a discharging hole 213 connected to suitable means for the evacuation of the recovered fluid, for example to an aspirator functioning with the Venturi principle and may be advantageously activated by the flow of the re-circulation liquid under pressure produced by the pump which fed the sprayer bars B.

## Claims

1. Tunnel sprayer for rows of orchards, vineyards or similar, of the towed, carried or self-propelled type, comprising on the uprights of a portal (3) opposed shields (S1, S2) where each shield is provided with at least a vertical spraying bar (B) with an adjacent vertical delivery chamber (6) of air under pressure in the same direction of flow, and it is provided, laterally and parallel to this, with a vertical intake chamber (10), connected to said delivery chamber by means of one or more generators (V) of air under pressure, like fans, turbines or similar, said chambers being arranged in inverted and opposed position in the said shields (S1, S2), in such a manner that to the delivery chamber for the air under pressure in one shield there is opposed the intake chamber on the other shield, and vice versa, wherein at least the delivery chamber (6) for the air under pressure is realised with curved walls to reduce the internal losses of head or charge, **characterized in that** the discharging mouth (106) of the delivery chamber which is open toward the row, presents a limited width, whereby the same chamber acts as a distributor and buffer and/or compensator, so that from its discharging mouth comes out an air flow with values of flow rate and pressure distributed in uniform manner and constant along the whole height of the mouth as much as possible, to form a blade of air which is continuous over the whole vertical extension of the mouth.

2. Sprayer according to claim 1, in which the curved walls of the delivery chamber (6) are scroll-shaped.

3. Sprayer according to claim 1, in which each delivery chamber (6) is provided with two side-by-side discharging mouths (106, 106').

4. Sprayer according to anyone or more of the preceding claims, **characterised by** the fact that the delivery chambers (6) are provided with internal distribution fins to uniformly divide the flow of air under pressure along the vertical extension of the relative discharging mouth/s.

5. Sprayer according to claim 3, in which each delivery chamber (6) is provided with internal fins (7) for the correct distribution of the flow between the two discharging mouths (106,106').

6. Sprayer according to claim 3, in which each delivery chamber (6) is internally structured in such a manner that from its discharging mouths (106, 106') come out respective flows of air with a different orientation with respect of the row, also with the object to generate turbulence.

7. Sprayer according to claim 6, in which the most internal discharging mouth (106) of each delivery chamber (6) discharges air perpendicularly to the row, while the most external discharging mouth (106') is oriented in such a manner that the relative discharged flow forms an internal angle which is substantially acute with respect to the adjacent flow discharged from the other mouth.

8. Sprayer according to anyone or more of the preceding claims, in which at the level of the discharging mouth/s of the delivery chamber there are provided respective bars with nozzles (B) which deliver the treatment liquid in the same direction of flow with the flows of air under pressure discharged by the said mouths.

9. Sprayer according to anyone or more of the preceding claims 3-8, **characterised by** the fact that when each delivery chamber (6) is provided with two discharging mouths (106, 106') the spraying bar/s for the treatment liquid are placed between the two discharging mouths for the air under pressure.

10. Sprayer according to anyone of the preceding claims, in which each intake chamber (10) is provided on the bottom with a tank (13) for the collection of the treatment liquid sucked and recovered during the functioning of the same sprayer and means are provided to ensure the periodical discharging of said tank.

11. Sprayer according to anyone or more of the preceding claims, in which each intake chamber (10) is structured with a mouth having a limited width and/or with a shape such to distribute in uniform manner the suction action on the whole height of the same mouth.

12. Tunnel sprayer according to any one or more of the preceding claims, in which a shield (S1) is fixed on the upright of the portal (3) which is rotatably supported around its vertical axis (A) by the braced structure (1) which binds the same portal to the support carriage (C), while the opposed shield (S2) is assembled onto a slide (2) which longitudinally slides on the breastplate (103) of the portal and which is connected to an actuator (4) by means of which it is possible to adjust the distance between said shields and to adapt the sprayer to the different requirements of utilisation, there being provided that the upright which carries said movable shield (S2) is connected to said slide (2) with the possibility of rotation onto same and there is provided an actuator (5) to realise with a remote control the said rotation around the longitudinal axis of the portal (3), the whole in such a manner to allow to the said sprayer to pass over possible obstacles (Z) present on the row (F) upon which the sprayer moves.

13. Sprayer according to claim 1, **characterised by** the fact that the shields (S1, S2) have a width or depth which is substantially equal to the diameter of the fans (V) which with their axis are arranged parallel to the longitudinal axis of the same shields, there being provided that the delivery chamber (6) for the air under pressure generated by the said fans (V) ends with an end wall (206) opposed to the same fans, with a shape suitably rounded, such to convey the air produced by the same fans toward the lateral discharging mouth (106) of the same chamber, in correspondence of which there is placed with - if required - possibility of orientation, at least a bar (B) for the delivering of the liquid for the treatment of the plants and there is arranged in a substantially position of tangency to said end (206), a deflector (14) which conveys in the direction of the row (F) of the plants the flow of air delivered by the fans and the flow of the phytosanitary treatment fluid sprayed by the bar/s (B).

14. Sprayer according to claim 13, in which the deflector (14) may be hinged around its vertical axis (114) for the connection with the shield and means may be provided to differently orientate such deflector in the direction of the row (R), for example to neutralize drift actions caused by the wind during the utilization of the same sprayer.

15. Sprayer according to claim 13, **characterised by** a correct ratio between the length of the intake chamber (10) and the length of the delivery chamber (6) of each shield (S1, S2), for example with the intake chamber (10) which has a length comprised between 2 and 3 times the length of the delivery chamber (6), the whole in such a manner that the two flows of air and phytosanitary liquid (G1, G2) delivered by the bars (B) and by the delivery chambers (6) of each shield are sufficiently distant in order to not negatively interfere the one with the other and in such a manner to generate between said flows a vortex (H) which ensures a uniform distribution of the active principle delivered by the bars (B) upon all the surfaces of the plants of the row (F).

16. Sprayer according to claim 1, in which on the lateral mouth of the intake chamber (10) of each shield (S1, S2), there are placed for the entire height vertical blades (15) preferably backwardly inclined with respect of the respective fans (V) which divide the same mouth in several adjacent mouths and which are structured in such a manner to realise traps for the dynamic pulling down of the liquid droplets carried by the sucked air flow.

17. Sprayer according to claim 16, in which the vertical blades (15) placed on the lateral mouth of the intake chamber (10) of each shield (S1, S2) realise side-by-side mouths and having a size which is for example increasing starting from the fans or, in any case, such as that also the more distant mouths from the fans (V) result to be interested by a sufficient and suitable flow of air.

18. Sprayer according to claim 16, in which the blades (15) placed on the lateral mouth of the intake chamber (10) of each shield (S1, S2) have the internal vertical side (115) with a U or C plan shape, open on the exposed surface of the same blades, in such a manner to stop and downwardly convey the droplets carried by the sucked flow of air which licks the said blades.

19. Sprayer according to claim 16, in which the surfaces of some or of all portions of each shield (S1, S2) which are licked by flow of air sucked by the intake chamber (10) and which by means of the fans (V) reaches the delivery chamber (6), are realised with a rough shape and/or are coated with porous and/or rough panels, in such a manner to stop and downwardly drip the drops of liquid carried by said flow of air.

20. Sprayer according to claim 1, in which each shield (S1, S2) is at the bottom provided and on its entire longitudinal extension, with a tank (13) for the collection of the recovered liquid and provided with a lowered portion with a discharging hole (213) connected to suitable discharging means of the same recovered liquid, for example to an aspirator functioning with the Venturi principle and may be advantageously activated by the flow of the re-circulation liquid under pressure produced by the pump which feeds the sprayer bars B.

## Revendications

1. Pulvérisateur en tunnel pour rangées de vergers, de vignes ou similaires, du type tracté, transporté ou automoteur, comprenant des écrans (S1, S2) opposés sur les montants d'un portique (3), chaque écran étant fourni avec au moins une barre de pulvérisation verticale (B) munie d'une chambre d'expulsion verticale adjacente (6) d'air sous pression selon la même direction d'écoulement, et il est pourvu, latéralement et parallèlement à ceci, d'une chambre d'admission verticale (10) connectée à ladite chambre d'expulsion au moyen d'un générateur (V) d'air sous pression ou davantage, tels que des ventilateurs, des turbines ou similaires, lesdites chambres étant disposées selon des positions opposées et inversées dans lesdits écrans (S1, S2), de manière telle que la chambre d'expulsion pour l'air sous pression d'un écran soit à l'opposée de la chambre d'admission de l'autre écran, et vice versa, dans lequel au moins la chambre d'expulsion (6) pour l'air sous pression est réalisée avec des parois courbes pour réduire les pertes internes de pression ou de charge, **caractérisé en ce que** l'évent de décharge (106) de la chambre d'expulsion qui est ouverte vers la rangée présente une largeur limitée, la même chambre agissant ainsi comme un distributeur et tampon et/ou compensateur, pour qu'un courant d'air s'échappe de son évent de décharge avec des valeurs de taux d'écoulement et de pression distribuées de façon uniforme et constante sur la hauteur entière de l'évent autant que possible, pour former une lame d'air qui est continue le long de l'extension verticale entière de l'évent.

2. Pulvérisateur selon la revendication 1, dans lequel les parois courbes de la chambre d'expulsion (6) prennent la forme de volutes.

3. Pulvérisateur selon la revendication 1, dans lequel chaque chambre d'expulsion (6) est pourvue de deux évents de décharge (106, 106') disposés en côte à côte.

4. Pulvérisateur selon l'une quelconque des revendications précédentes ou davantage, **caractérisée par le fait que** les chambres d'expulsion (6) sont pourvues d'ailettes de distribution internes pour diviser le flot d'air sous pression uniformément le long de l'extension verticale de l'évent ou des évents de décharge relatifs.

5. Pulvérisateur selon la revendication 3, dans lequel chaque chambre d'expulsion (6) est pourvue d'ailettes internes (7) pour la distribution correcte de l'écoulement entre les deux évents de décharge (106, 106').

6. Pulvérisateur selon la revendication 3, dans lequel la structure interne de chaque chambre d'expulsion (6) est agencée de manière telle que des écoulements d'air respectifs s'échappent de leurs évents de décharge (106, 106') avec une orientation différente par rapport à la rangée, ayant également pour objet de produire des turbulences.

7. Pulvérisateur selon la revendication 6, dans lequel l'évent de décharge (106) le plus interne de chaque chambre d'expulsion (6) décharge de l'air perpendiculairement à la rangée, alors que l'évent de décharge (106') le plus externe est orienté de manière telle que l'écoulement déchargé relatif forme un angle interne, qui est substantiellement aigu par rapport à l'écoulement adjacent déchargé depuis l'autre évent.

8. Pulvérisateur selon l'une quelconque ou plusieurs des revendications précédentes, dans lequel des barres respectives avec des buses (B) sont fournies au niveau de l'évent ou des évents de décharge de la chambre d'expulsion, qui déchargent le liquide de traitement selon la même direction d'écoulement que les écoulements d'air sous pression déchargés par lesdits évents.

9. Pulvérisateur selon l'une quelconque ou plusieurs des revendications précédentes, **caractérisé par le fait que** la ou les barres de pulvérisation pour le liquide de traitement sont placées entre les deux évents de décharge pour l'air sous pression lorsque chaque chambre d'expulsion (6) est fournie avec deux évents de décharge (106, 106').

10. Pulvérisateur selon l'une quelconque des revendications précédentes, dans lequel chaque chambre d'admission (10) est fournie en son fond avec un réservoir pour la collecte du liquide de traitement aspiré et récupéré pendant le fonctionnement du même pulvérisateur et des moyens sont fournis pour assurer la décharge périodique dudit réservoir.

11. Pulvérisateur selon l'une quelconque ou plusieurs des revendications précédentes, dans lequel chaque chambre d'admission (10) est structurée avec un évent possédant une largeur limitée et/ou avec une forme propre à distribuer l'action d'aspiration de façon uniforme sur la hauteur entière du même évent.

12. Pulvérisateur en tunnel selon l'une quelconque ou plusieurs des revendications précédentes, dans lequel un écran (S1) est fixé sur le montant du portique (3), qui est maintenu de façon rotative autour de son axe vertical (A) par la structure charpentée (1) qui lie le même portique au chariot de maintien (C), alors que l'écran opposé (S2) est assemblé sur une glissière (2) qui glisse longitudinalement sur le plastron (103) du portique et qui est connectée à un déclencheur (4), au moyen duquel il est possible d'ajuster la distance entre lesdits écrans et d'adapter le pulvérisateur aux différents besoins d'utilisation, le montant qui porte ledit écran déplaçable (S2) étant connecté à ladite glissière (2) avec la possibilité d'entrer en rotation sur ladite glissière et un déclencheur (5) étant fourni pour réaliser ladite rotation autour de l'axe longitudinal du portique (3) avec une commande à distance, l'ensemble étant réalisé d'une manière telle qu'il permet audit pulvérisateur de passer au-delà d'obstacles possibles (Z) présents sur la rangée (F) sur laquelle le pulvérisateur se déplace.

13. Pulvérisateur selon la revendication 1, **caractérisée par le fait que** les écrans (S1, S2) possèdent une largeur ou une profondeur qui est substantiellement égale au diamètre des ventilateurs (V) qui sont disposés, avec leur axe, de manière parallèle à l'axe longitudinal des mêmes écrans, la chambre d'expulsion (6) pour l'air sous pression produit par lesdits ventilateurs (V) étant réalisée de manière à s'achever par une paroi d'extrémité (206) opposée aux mêmes ventilateurs, avec une forme convenablement arrondie, propre à convoyer l'air produit par les mêmes ventilateurs vers l'évent de décharge latéral (106) de la même chambre, en correspondance de laquelle au moins une barre (B) pour l'expulsion du liquide pour le traitement des plantes est placée avec -si nécessaire- une possibilité d'orientation, et un déflecteur (14) est disposé dans une position substantiellement tangentielle à ladite extrémité (206), qui convoie l'écoulement de l'air fourni par les ventilateurs et l'écoulement du fluide de traitement phytosanitaire pulvérisé par la ou les barres (B) dans la direction de la rangée (F) des plantes.

14. Pulvérisateur selon la revendication 13, dans lequel le déflecteur (14) peut être articulé autour de son axe vertical (114) pour la connexion avec l'écran et des moyens peuvent être fournis pour orienter un tel déflecteur différemment selon la direction de la rangée (R), par exemple pour neutraliser des actions de déplacement latéral causées par le vent pendant l'utilisation du même pulvérisateur.

15. Pulvérisateur selon la revendication 13, **caractérisé par** un rapport correct entre la longueur de la chambre d'admission (10) et la longueur de la chambre d'expulsion (6) de chaque écran (S1, S2), par exemple avec la chambre d'admission (10) qui possède une longueur comprise entre deux et trois fois la longueur de la chambre d'expulsion (6), l'ensemble étant tel que les deux écoulements d'air et de liquide phytosanitaire (G1, G2) expulsés par les barres (B) et par les chambres d'expulsion (6) de chaque écran soient suffisamment distants pour ne pas interférer négativement l'un avec l'autre et tel qu'à produire un vortex (H) entre les deux écoulements qui assurent une distribution uniforme du principe actif expulsé par les barres (B) sur toutes les surfaces des plantes de la rangée (F).

16. Pulvérisateur selon la revendication 1, dans lequel des lames verticales (15) sont placées sur la hauteur entière de l'évent latéral de la chambre d'admission (10) de chaque écran (S1, S2), qui sont préférablement inclinées vers l'arrière par rapport aux ventilateurs (V) respectifs, qui divisent le même évent en plusieurs évents adjacents et qui sont structurées de manière telle qu'à réaliser des pièges pour le recueil dynamique des gouttes de liquide portées par l'écoulement d'air aspiré.

17. Pulvérisateur selon la revendication 16, dans lequel les lames verticales (15) placées sur l'évent latéral de la chambre d'admission (10) de chaque écran (S1, S2) réalisent des évents disposés en côte à côte et possédant une taille qui par exemple augmente au départ des ventilateurs ou, en tout cas, de manière à ce que les évents plus distants des ventilateurs (V) reçoivent également un écoulement d'air suffisant et approprié.

18. Pulvérisateur selon la revendication 16, dans lequel les lames (15) placées sur l'évent latéral de la chambre d'admission (10) de chaque écran (S1, S2) possèdent un plan du côté vertical interne (115) en forme de U ou en C, qui est ouvert sur la surface exposée des mêmes lames, de manière à arrêter les gouttes portées par l'écoulement d'air aspiré qui effleure lesdits lames, et les convoyer vers le bas.

19. Pulvérisateur selon la revendication 16, dans lequel les surfaces de certaines ou de toutes les portions de chaque écran (S1, S2), qui sont effleurées par l'écoulement d'air aspiré par la chambre d'admission (10) qui atteint la chambre d'expulsion (6) au moyen des ventilateurs (V), sont réalisées avec une forme rugueuse et/ou sont recouvertes de panneaux poreux et/ou rugueux, de manière à arrêter les gouttes de liquide portées par ledit écoulement d'air et les égoutter vers le bas.

20. Pulvérisateur selon la revendication 1, dans lequel chaque écran (S1, S2) est fourni, en son fond et sur son extension longitudinale entière, avec un réservoir (13) pour la collecte du liquide récupéré et doté d'une portion inférieure munie d'un orifice de décharge (213) connecté à des moyens appropriés de décharge du même liquide récupéré, par exemple à un aspirateur fonctionnant selon le principe de Venturi, qui peuvent avantageusement être activés par l'écoulement du liquide en re-circulation sous pression produite par la pompe qui alimente les barres de pulvérisation B.

## Patentansprüche

1. Tunnelsprühapparat für Reihen in Obstgärten, Weingärten, oder ähnlichen, der gezogenen, getragenen oder selbstfahrenden Art, mit gegenüberliegenden Abschirmungen (S1, S2) an den Ständern eines Portals (3), bei dem jede Abschirmung mit mindestens einer vertikalen Sprühschiene (B) mit einer angrenzenden vertikalen Ausströmungskammer (6) für Druckluft in der gleichen Strömungsrichtung sowie seitlich und parallel dazu mit einer vertikalen Ansaugkammer (10) versehen ist, die mit der Ausströmungskammer mittels eines oder mehrerer Druckluftgeneratoren (V), z.B. Ventilatoren, Turbinen oder ähnlichem, verbunden ist, und die Kammern in umgekehrter und entgegengesetzter Position in den Abschirmungen (S1, S2) so angeordnet sind, daß die Ausströmungskammer für Druckluft in der einen Abschirmung der Ansaugkammer in der anderen Abschirmung gegenüberliegt und umgekehrt, wobei mindestens die Ausströmungskammer (6) für Druckluft mit gekrümmten Wandungen ausgebildet ist, um die inneren Druck- oder Ladungsverluste zu reduzieren, **dadurch gekennzeichnet, daß** die Austrittsöffnung (106) der Ausströmungskammer, die in Richtung zur Reihe hin offen ist, eine eingeschränkte Weite hat, wobei diese Kammer als ein Verteiler und Puffer und/oder Kompensator wirkt, so daß aus ihrer Austrittsöffnung ein Luftstrom mit gleichmäßig verteilten Druckwerten und Strömungsraten kommt, der entlang der gesamten Höhe der Öffnung möglichst konstant ist, um ein Luftschwert zu bilden, das über die ganze vertikale Ausdehnung der Öffnung zusammenhängend ist.

2. Sprühapparat apparus nach Anspruch 1, bei welchem die gekrümmten Wandungen der Ausströmmgskammer (6) schreckenförmig sind.

3. Sprühapparat nach Anspruch 1, bei welchen jede Ausströmungskammer (6) mit zwei nebeneinander liegenden Austrittsöffnungen (106, 106') vorsehen ist.

4. Sprühapparat nach einem oder mehreren der vorhergehenden Ansprüche, **dadurch gekennzeichnet, daß** die Ausströmungskammern (6) mit inneren verteilungsleitfächen versehen sind, um den Druckluftstrom entlang der vertikalen Ausdehnung der jeweiligen Austrittsöffnung(en) gleichmäßig aufzuteilen.

5. Sprühapparat nach Anspruch 3, bei welchen jede Ausströmungskammer (6) mit inneren Leitflächen (7) für die korrekte Verteilung der Strömung zwischen den zwei Austrittsöffnungen (106, 106') versehen ist.

6. Sprühapparat nach Anspruch 3, bei welchem jede Ausströmungskammer (6) mit inneren Strukturen in einer Weise versehen ist, daß aus seinen Austrittsöffnungen (106, 106') jeweils Luftströme mit verschiedener Ausrichtung bezogen auf die Reihe austreten, auch um Verwirbelungen zu erzeugen.

7. Sprühapparat nach Anspruch 6, bei welchem aus der am weitesten innen gelegenen Austrittsöffnung (106) jeder Ausströmungskammer (6) Luft senkrecht zu der Reihe ausströmt, wahrend die am weitesten außen gelegene Austrittsöffnung (106') in einer Weise ausgerichtet ist, daß die betreffende Austrittsströmung einen im wesentlichen spitzer inneren Winkel mit der benachbarten Austrittsströmung der anderen Öffnung bildet.

8. Sprühapparat nach einem oder mehreren der vorhergehenden Ansprüche, bei welchem auf der Höhe der Austrittsöffnung (on) der Ausströmungskammer jeweils Schienen mit Düsen (B) vorgesehen sind, welche die Behandlungsflüssigkeit in der gleichen Strömungsrichtung abgeben wie die Druckluftströme aus den Öffnungen austreten.

9. Sprühapparat nach einem oder mehreren der vorhergehenden Ansprüche 3 bis 8, **dadurch gekennzeichnet, daß** die Sprühschiene (n) für die Behandlungsflüssikeit zwischen den beiden Austrittsöffnungen für die Druckluft angeordnet ist (sind), wenn jede Ausströmungskammer (6) mit zwei Austrittsöffnungen (106, 106') versehen ist.

10. Sprühapparat nach einem der vorhergehenden Ansprüche, bei welchem jede Ansaugkammer (10) am Boden mit einem Behälter (13) zur Aufnahme der Behandlungsflüssigkeit versehen ist, die während des Betriebs des Sprühapparats eingesaugt und wiedergewonnen ist, und Mittel vorgesehen sind, die das regelmäßige Entleeren des Behälters sicherstellen.

11. Sprühapparat nach einem oder mehreren der vorhergehenden Ansprüche, bei welchem jede Ansaugkammer (10) mit einer Öffnung ausgebildet ist, die eine derart eingeschränkte Weite und/oder eine solche Form hat, daß die Ansaugwirkung gleichmäßig auf die ganze Höhe der Öffnung verteilt ist.

12. Tunnelsprühapparat nach einem oder mehreren der vorhergehenden Ansprüche, bei welchem eine Abschirmung (S1) an dem Ständer des Portals (3) befestigt ist, der durch die aussteifende Struktur (1), die das Portal an dem Tragwagen (C) befestigt, um seine vertikale Achse (A) drehbar gelagert ist, wanrend die gegenüberliegende Abschirmung (S2) an einem Schlitten (2) montiert ist, der längs des Querkaupts (103) des Portals gleitet und mit einem Antrieb (4) verbunden ist, mittels dessen der Abstand zwischen den Abschirmungen einstellbar und der Sprühapparat an verschiedene Nutzungsanforderungen anzupassen ist wobei vorgesehen ist, daß der Ständer, der die bewegbare Abschirmung (S2) trägt, mit dem Schlitten (2) drenbar verbunden ist, und durch einen Antrieb (5) mit Fernsteuerung die Drehung um die Längsachse des Portals (3) derart ausführbar ist, daß der Sprühapparat an möglichen Hindernissen (Z) wobei bewegbar ist, die sich in der Reihe (F) befinden, entlang der sich der Sprühapparat bewegt.

13. Sprühapparat nach Anspruch 1, **dadurch gekennzeichnet, daß** die Abschirmungen (S1, S2) eine Weite oder Tiefe haben, die im wesentlichen gleich dem Durchmesser der Ventilatoren (V) ist, die mit ihrer Achse parallel zur Längsachse der Abschirmungen angeordnet sind, wobei vorgesehen ist, daß die Ausströmungskammer (6) für die von den Ventilatoren (V) erzeugte Druckluft mit einer den Ventilatoren gegenüberliegend angeordneten Stirnwand (206) mit einer geeigneten gerundeten Form abschließt, um so den von den Ventilatoren erzeugten Luftstrom in Richtung der seitlichen Austrittsöffnungen (106) dieser Kammer zu befördern, in Übereinstimmung damit dort mindestens eine Schiene (B) für die Abgabe der Flüssigkeit für die Pflanzenbehandlung, falls erforderlich mit der Möglichkeit der Ausrichtung angeordnet ist, und in einer zu der Stirnwand (206) im wesentilchen tangentialen Position ein Deflektor (14) angebracht ist, der den von den Ventilatoren gelieferten Luftstrom und den von der(den) Schiene(n) (B) versprühten Pflanzenschutzflüssigkeitsstrom in die Richtung zu der Reihe (F) der Pflanzen befördert.

14. Sprühapparat nach Anspruch 13, bei welchem der Deflektor (14) um seine vertikale Achse (114) zur Verbindung mit der Abschirmung schwenkbar ist und Mittel vorsehbar sind, um solch einen Deflektor in Richtung der Reihe (F) unterschiedlich auszurichten, zum Beispiel um ein durch Wind verursachtes Abdriften während der Verwendung des Sprühapparats auszugleichen.

15. Sprühapparat nach Anspruch 13, **dadurch gekennzeichnet, daß** bei jeder Abschirmung (S1, S2) ein bestimmtes Verhältnis zwischen der Länge der Ansaugkammer (10) und der Länge der Ausströmungskammer (6) vorliegt, indem zum Beispiel die Ansaugkammer (10) die Zwei- bis dreifache Länge der Ausströmungskammer (6) hat, wobei die zwei von den Schienen (B) und den Ausströmungskammern (6) jeder der Abschirmungen abgegebenen Ströme aus Luft und Pflanzenschutzflüssigkeit (G1, G2) ausreichend voneinander entfernt sind, um nicht gegenseitig negativ aufeinander einzuwirken und um zwischen den beiden Strömen einen Wirbel (H) zu erzeugen, der eine gleichmäßige Verteilung des von den Schienen (B) zugeführten aktiven Wirkstoffs auf alle Oberflächen der Pflanzen der Reihe (F) sicherstellt.

16. Sprühapparat nach Anspruch 1, bei welchem jeder Abschirmung (S1, S2) an der seitlichen Öffnung der Ansaugkammer (10) auf der gesamten Höhe vertikale Leitbleche (15) angeordnet sind, die, von den betreffenden Ventilatoren (V) aus betrachtet, vorzugsweise rückwärts geneigt sind, die Öffnung in mehrere nebeneinander liegende Öffnungen unterteilen und so gestaltet sind, daß sie Fallen für die dynamische Abscheidung der von der eingesaugten Luft transportierten Flüssigkeitströpfchen bilden.

17. Sprühapparat nach Anspruch 16, bei welchem die an den seitlichen Öffnungen der Ansaugkammer (10) einer jeden Abschirmung (S1, S2) angeordneten vertikalen Leitbleche (15) nebeneinander liegende Öffnungen bilden, die eine, beispielsweise von den Ventilatoren ausgehend, zunehmende Größe haben oder jedenfalls so bemessen sind, daß im Ergebnis auch die von den Ventilatoren (V) weiter entfernt liegenden Öffnungen durch einen ausreichenden und geeigneten Luftstrom beteiligt sind.

18. Sprühapparat nach Anspruch 16, bei welchem die an den seitlichen Öffnungen der Ansaugkammer (10) einer Jeden Abschirmung (S1, S2) angeorneten Leitbleche (15) an der inneren vertikalen Kante (115) mit einer an der exponierten Seite der Leitbleche offenen U- oder C-förmigen Gestalt versehen sind, um so die Tröpfchen aufzuhalten und nach unten zu fördern, die von dem eingesaugten Luftstrom transportiert werden, der an den Leitblechen vorbeistreicht.

19. Sprühapparat nach Anspruch 16, bei welchem die Oberflächen von manchen oder von allen Bereichen einer jeden Abschirmung (S1, S2), an denen ein Luftstrom vorbeistreicht, der von der Ansaugkammer (10) eingesaugt ist. und der mittels der Ventilatoren (V) die Auströmungskammer (6) erreicht, in einer rauhen Form verwirklicht sind und/oder mit poröser und/oder rauhen Paneelen überzogen sind, um so die Flüssigkeitströpfchen, die von dem Luftstrom transportiert werden, aufzuhalten und nach unten abtropfen zu lassen.

20. Sprühapparat nach Anspruch 1, bei weichem jede Abschirmung (S1, S2) am Boden auf ihrer gesamten Längserstrekkung mit einem Behälter (13) zum Auffangen der wiedergewonnenen Flüssigkeit und mit einem abgesenkten Bereich mit einem Abflußloch (213) versehen ist, das nik geeigneten Ableitmitteln der wiedergewonnenen Flüssigkeit verbunden ist, zum Beispiel mit einem Saugapparat, der nach dem Venturiprinzip funktioniert und vorzugsweise durch den Fluß der zirkulierenden Flüssigkeit betreibbar ist, deren Druck mittels der Pumpe erzeugt ist, welche die Sprühschienen (B) beschickt.
